# FASCICULE DE BREVET EUROPEEN

(11) **EP 3 293 988 B1**
(45) Date de publication et mention de la délivrance du brevet: **03.04.2019**
(21) Numéro de dépôt: 17156588.0
(22) Date de dépôt: 17.02.2017
(51) Int. Cl.: H04L 29/08, H04M 1/725, H04W 4/02, H04W 4/50, H04W 4/38, H04W 4/33, H04M 1/73, H04W 52/02, G06N 99/00

(54) **PROCÉDÉ DE CONTRÔLE DE LA DÉTECTION EN TEMPS RÉEL D'UNE SCÈNE PAR UN APPAREIL DE COMMUNICATION SANS FIL, PAR EXEMPLE UN TÉLÉPHONE MOBILE CELLULAIRE, ET APPAREIL CORRESPONDANT**
KONTROLLVERFAHREN DER ECHTZEIT-DETEKTION EINER SZENE MITHILFE EINES DRAHTLOSEN KOMMUNIKATIONSGERÄTS, BEISPIELSWEISE EINES MOBILTELEFONS, UND ENTSPRECHENDES GERÄT
METHOD FOR CONTROLLING THE REAL TIME SCENE DETECTION BY A WIRELESS COMMUNICATION APPARATUS, FOR EXAMPLE, A CELLULAR MOBILE PHONE, AND CORRESPONDING APPARATUS

(30) Priorité: 07.09.2016 FR 1658298
(43) Date de publication de la demande: 14.03.2018
(73) Titulaire: STMicroelectronics (Rousset) SAS, 13790 Rousset (FR); STMICROELECTRONICS SA, 92120 Montrouge (FR)
(72) Inventeur: DEMAJ, Pierre, 06200 Nice (FR); DURNERIN, Matthieu, 92800 Puteaux (FR); FOLLIOT, Laurent, 06620 Gourdon (FR); CHAMPSAUR, Ludovic, 06600 Antibes (FR)
(74) Mandataire: Casalonga

(56) Documents cités:
- US-A1- 2010 302 028
- US-A1- 2012 191 966
- US-A1- 2013 238 535
- US-A1- 2014 247 206
- US-A1- 2015 289 107
- SCHUCHHARDT MATTHEW ET AL: "CAPED: Context-aware personalized display brightness for mobile devices", 2014 INTERNATIONAL CONFERENCE ON COMPILERS, ARCHITECTURE AND SYNTHESIS FOR EMBEDDED SYSTEMS (CASES), ACM, 12 octobre 2014 (2014-10-12), pages 1-10, XP032715694, DOI: 10.1145/2656106.2656116
- BARCHIESI DANIELE ET AL: "Acoustic Scene Classification: Classifying environments from the sounds they produce", IEEE SIGNAL PROCESSING MAGAZINE, IEEE SERVICE CENTER, PISCATAWAY, NJ, US, vol. 32, no. 3, 1 mai 2015 (2015-05-01), pages 16-34, XP011577488, ISSN: 1053-5888, DOI: 10.1109/MSP.2014.2326181 [extrait le 2015-04-02]

## Description

Des modes de mise en oeuvre et de réalisation de l'invention concernent le contrôle de la détection en temps réel d'une scène par un appareil de communication sans fil, par exemple un téléphone mobile cellulaire intelligent (« smartphone ») ou encore une tablette numérique, équipé d'au moins un capteur de mesure environnemental comme par exemple un accéléromètre.

Certains appareils de communication sans fil comme par exemple certains types de « smartphones » ou de tablettes sont capables aujourd'hui d'effectuer des détections de scène ce qui permet de déterminer dans quel environnement se situe l'utilisateur du téléphone ou de la tablette. Cela peut ainsi permettre à une tierce partie, par exemple un annonceur publicitaire ou un organisme culturel par exemple d'envoyer des informations pertinentes en liaison avec le lieu dans lequel se situe l'utilisateur de l'appareil.

Ainsi, par exemple si l'utilisateur se situe dans un lieu touristique donné, on peut lui envoyer ainsi des adresses de restaurant à proximité de l'endroit où il se trouve. De même, on peut également lui envoyer des informations relatives à certains monuments qui se situent à proximité de l'endroit où il se trouve.

Il est également possible de faire effectuer certains réglages automatiquement par le téléphone (par exemple on détecte à l'aide d'un capteur audio que l'endroit est calme et le téléphone se met lui-même en mode vibreur).

Actuellement, la détection de la scène par le téléphone peut s'effectuer à intervalles fixes. Cependant, ceci ne fournit aucune flexibilité ce qui peut conduire à une consommation indue de courant préjudiciable à la longévité de la batterie du téléphone.

Une autre solution peut consister à utiliser l'application GPS du téléphone pour pouvoir localiser en temps réel l'utilisateur et par conséquent la scène détectée.

Cependant, là encore, l'utilisation de la fonction GPS est préjudiciable pour la consommation du téléphone.

Il existe donc un besoin d'améliorer la prise de décision quant à la détection d'une scène par un appareil de communication sans fil, par exemple un téléphone mobile cellulaire ou une tablette, qui permette une plus grande flexibilité et présente un impact réduit sur la consommation de courant.

Et, selon un mode de mise en oeuvre et de réalisation, on va utiliser le ou certains au moins des capteurs de mesure environnemental(aux) déjà généralement présent(s) sur un téléphone mobile cellulaire ou une tablette, par exemple un accéléromètre et éventuellement un magnétomètre ou un gyroscope ou encore un capteur audio, pour déterminer les instants d'activation de la détection de la scène.

Ainsi, selon un aspect, il est proposé un procédé de contrôle de la détection en temps réel d'une scène par un appareil de communication sans fil équipé d'au moins un capteur de mesure environnemental, le procédé comprenant un ajustement temporel des instants d'activation de ladite détection à partir de valeurs de mesure délivrées par ledit au moins un capteur de mesure environnemental à des instants de mesure.

Par détection de scène, on entend notamment une discrimination de la scène dans laquelle se trouve l'appareil de communication sans fil. Plusieurs solutions connues existent pour détecter (discriminer) une scène, divulguées entre autres par les demandes de brevets suivantes : US2015/289107, US2013/238535, US2014/247206 et US2012/191966. Ces solutions utilisent par exemple un ou plusieurs capteurs dédiés associés généralement à un algorithme spécifique.

Ces capteurs peuvent être, notamment dans des applications requérant très peu de consommation de courant, par exemple des accéléromètres et/ou des gyroscopes et/ou des magnétomètres et/ou des microphones. Il s'agit là d'une approche multimodale. Et dans ce cas un exemple d'algorithme spécifique peut être un algorithme mettant en oeuvre un arbre binaire de décisions sur la base de descripteurs ou attributs résultant de traitements particuliers (par exemple des filtrages) sur les données brutes issues des capteurs. Ces descripteurs peuvent être par exemple des moyennes, des valeurs d'énergie, des variances, etc...

Par capteur de mesure environnemental on entend notamment tout type de capteur capable de fournir des informations sur l'environnement dans lequel se trouve l'appareil de communication sans fil, incluant par exemple des caractéristiques spatiotemporelles de l'environnement de l'appareil, comme par exemple le caractère temporellement figé ou non de l'environnement, la vitesse d'évolution de la modification spatiotemporelle de l'environnement (à partir de la détection du mouvement de l'appareil) et/ou des caractéristiques sonores et/ou spatiales et/ou visuelles de cet environnement, comme par exemple le niveau de bruit de l'environnement et/ou l'altitude et/ou le niveau de luminosité de l'environnement (à partir par exemple de capteurs tels que des baromètres, des capteurs de proximité, des capteurs optiques.....).

Le ou les capteurs utilisés pour la détection de la scène peuvent être différents du ou des capteurs environnementaux.

Cela étant notamment dans un contexte où l'appareil est constamment sous tension (Always-On) et où la durée de vie de la batterie est un critère important, l'un au moins des capteurs environnementaux peut être aussi un capteur utilisé pour la détection de scène. Ce peut être le cas par exemple mais non limitativement pour un accéléromètre qui peut être utilisé à la fois comme capteur environnemental pour donner une indication sur l'intensité du mouvement de l'appareil et comme capteur contribuant à la détection de scène.

Selon un mode de mise en oeuvre, le procédé comprend en outre une détermination de plusieurs critères, typiquement au moins deux critères, comme par exemple des critères définissant l'intensité du mouvement de l'appareil (téléphone par exemple), à partir desdites valeurs de mesure et un ajustement temporel desdits instants d'activation à partir de ces critères.

La détermination de ces critères peut comprendre avantageusement une mise en oeuvre d'un algorithme de classification ou classifieur, et de préférence une mise en oeuvre d'un méta algorithme de classification ou méta classifieur qui effectue par exemple un vote majoritaire sur les cinq dernières mesures afin d'éviter des erreurs aberrantes.

Le procédé comprend alors avantageusement un ajustement temporel des instants de mesure à partir de ces critères et une réinitialisation de la détermination de ces critères (réinitialisation du classifieur par exemple) lors de chaque ajustement temporel des instants de mesure.

Cet ajustement temporel des instants de mesure peut comprendre par exemple un ajustement de la durée séparant deux instants de mesure successifs.

Les instants d'activation de la détection de la scène peuvent être identiques aux instants de mesure des mesures délivrées par les capteurs de mesure. C'est notamment le cas lorsque les capteurs de mesure environnementaux sont également utilisés pour la détection de scène.

Cela étant, ces instants d'activation pourraient être différents de ces instants de mesure, par exemple si l'on utilise des capteurs environnementaux différents de ceux utilisés pour la détection de scène. Aussi, le procédé comprend alors un ajustement temporel des instants d'activation tel qu'un ajustement de la durée séparant deux instants d'activation successifs.

A titre d'exemple, on peut augmenter l'intervalle temporel séparant deux instants de mesure (ou deux instants d'activation) lorsqu'il n'y a pas ou peu de mouvement et on peut diminuer cet intervalle temporel lorsque le mouvement est important ce qui permet d'effectuer un suivi efficace des changements de l'environnement du téléphone lorsqu'il y a un mouvement rapide tout en économisant de la puissance lorsque le téléphone n'est pas en mouvement.

Ledit au moins un capteur de mesure environnemental peut comprendre au moins un accéléromètre.

On peut également utiliser un capteur environnemental du type capteur audio, par exemple un microphone.

Cela étant, l'appareil de communication sans fil peut être équipé de plusieurs capteurs environnementaux et, dans ce cas, on effectue avantageusement un ajustement temporel des instants d'activation de ladite détection à partir de valeurs de mesure délivrées par lesdits capteurs à des instants de mesure.

Les capteurs de mesure environnementaux peuvent être choisis dans le groupe formé par un accéléromètre, un gyroscope, un magnétomètre, un capteur audio, un baromètre, un capteur de proximité, un capteur optique.

En d'autres termes, on peut utiliser un ou plusieurs accéléromètres ou alors un accéléromètre en combinaison avec un gyroscope éventuellement en combinaison avec un magnétomètre ou encore plusieurs capteurs audio ou alors un ou plusieurs capteurs audio en combinaison avec un ou plusieurs accéléromètres, ou encore un gyroscope ou encore un magnétomètre.

Selon un autre aspect, il est proposé un appareil de communication sans fil, comprenant
des moyens de détection configurés pour détecter en temps réel une scène,
au moins un capteur de mesure environnemental, et
des moyens de contrôle configurés pour effectuer un ajustement temporel des instants d'activation de ladite détection à partir de valeurs de mesure délivrées par ledit au moins un capteur de mesure environnemental à des instants de mesure.

Les moyens de détection peuvent inclure ledit au moins un capteur de mesure environnemental, et lorsqu'il y a plusieurs capteurs de mesure, certains au moins des capteurs de mesure environnementaux.

Selon un mode de réalisation, l'appareil comprend en outre des moyens de traitement configurés pour effectuer une détermination de plusieurs critères à partir desdites valeurs de mesure et les moyens de contrôle sont configurés pour effectuer ledit ajustement temporel desdits instants d'activation à partir desdits critères.

Les moyens de traitement peuvent comprendre une machine d'état mettant en oeuvre un algorithme de classification, de préférence un méta algorithme de classification.

Selon un mode de réalisation, l'appareil comprend en outre des moyens de commande configurés pour effectuer un ajustement temporel des instants de mesure à partir desdits critères et réinitialiser les moyens de détermination lors de chaque ajustement temporel des instants de mesure.

Les moyens de commande peuvent être configurés pour effectuer un ajustement de la durée séparant deux instants de mesure successifs.

Par ailleurs, les moyens de contrôle peuvent être configurés pour effectuer un ajustement de la durée séparant deux instants d'activation successifs.

Lorsque l'appareil comprend plusieurs capteurs de mesure environnementaux, qui peuvent être choisis dans le groupe formé par un accéléromètre, un gyroscope, un magnétomètre, un capteur audio, un baromètre, un capteur de proximité, un capteur optique, les moyens de contrôle sont configurés pour effectuer un ajustement temporel des instants d'activation de ladite détection à partir de valeurs de mesure délivrées par lesdits capteurs à des instants de mesure. Différents aspects de l'invention sont définis par les revendications indépendantes 1 et 11 ainsi que par les revendications dépendantes 2 à 10 et 12 à 21.

D'autres avantages et caractéristiques de l'invention apparaîtront à l'examen de la description détaillée et de modes de mise en oeuvre et de réalisation, nullement limitatifs, et des dessins annexés sur lesquels :

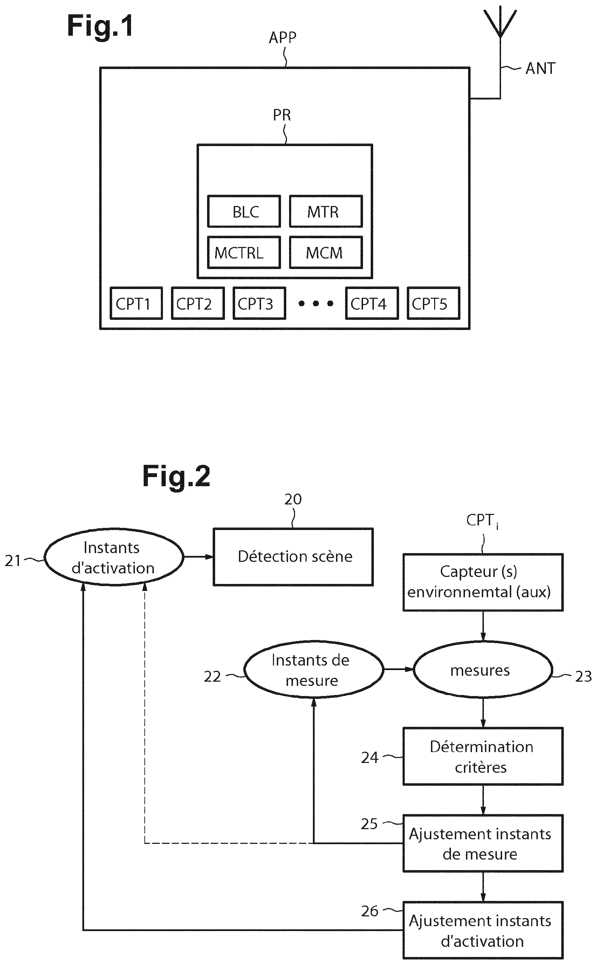

- Les figures 1 à 3 illustrent schématiquement différents modes de mise en oeuvre et de réalisation de l'invention.

Sur la figure 1, la référence APP désigne un appareil électronique, par exemple un appareil de communication sans fil équipé d'une antenne ANT. Cet appareil peut être un téléphone mobile cellulaire tel qu'un téléphone intelligent (smartphone) ou encore une tablette numérique.

L'appareil APP comporte ici plusieurs capteurs de mesure environnementaux CPT1-CPT5, sans que ce nombre ne soit limitatif.

A titre indicatif, les capteurs CPT1, CPT2, CPT3, CPT4, CPT5 peuvent être choisis dans le groupe formé par un accéléromètre, un gyroscope, un magnétomètre, un capteur audio tel qu'un microphone un baromètre, un capteur de proximité, un capteur optique.

Bien entendu, l'appareil peut être équipé de plusieurs accéléromètres et/ou de plusieurs gyroscopes et/ou plusieurs magnétomètres et/ou de plusieurs capteurs audio et/ou d'un baromètre, et/ou d'un ou plusieurs capteurs de proximité, et/ou un ou plusieurs capteurs optiques.

L'un au moins et en général certains au moins de ces capteurs de mesure environnementaux, peuvent, en particulier dans une approche multimodale, former en combinaison avec un algorithme classique de discrimination, par exemple du type arbre de décision binaire, destiné à travailler par exemple sur des données brutes filtrées issues de ces capteurs, des moyens de détection configurés pour détecter une scène. Ces moyens peuvent ainsi par exemple détecter si l'appareil APP se situe dans tel ou tel environnement (restaurant, véhicule en mouvement, etc.....).

En variante, l'appareil APP pourrait être équipé d'un capteur spécifique, par exemple le capteur CPT1, différent des capteurs environnementaux mentionnés ci-dessus, par exemple une micro caméra, apte à détecter une scène de l'environnement de l'appareil.

Cela étant dans un contexte où l'appareil est constamment sous tension (Always-On) et où la durée de vie de la batterie est un critère important, il est préférable d'utiliser comme capteurs contribuant à détecter une scène de l'environnement de l'appareil, un ou des capteurs du type environnemental mentionnés ci-dessus.

On suppose maintenant à titre d'exemple non limitatif que tous les capteurs environnementaux CPT1-CPT5 contribuent à la détection de la scène.

Outre ces capteurs, l'appareil APP comporte un bloc BLC apte à coopérer avec les capteurs CPTi pour traiter la scène détectée et transmettre les informations via l'antenne ANT de l'appareil.

L'appareil comporte également des moyens de contrôle MCTRL configurés pour effectuer un ajustement temporel des instants d'activation de la détection de la scène à partir de valeurs de mesure délivrées par les capteurs de mesure environnementaux CPT1-CPT5 à des instants de mesure.

Dans cet exemple, les instants d'activation de la détection de la scène sont les instants de mesure. Cela étant, notamment dans une variante utilisant un capteur spécifique de détection, les instants d'activation de la détection de la scène peuvent être différents des instants de mesure.

L'appareil APP comporte également des moyens de traitement MTR configurés pour déterminer ici plusieurs critères à partir des valeurs de mesure délivrées par les capteurs CPT1-CPT5.

L'appareil APP comporte également des moyens de commande MCM configurés pour effectuer un ajustement temporel des instants de mesure à partir des critères déterminés et, comme on le verra ci-après, réinitialiser les moyens de détermination lors de chaque ajustement temporel des instants de mesure.

Ces différents moyens BLC, MTR, MCTRL, et MCM sont par exemple réalisés par des modules logiciels au sein du processeur PR de l'appareil APP.

On se réfère maintenant plus particulièrement à la figure 2 pour décrire un mode de mise en oeuvre du procédé selon l'invention.

Comme illustré sur la figure 2, à des instants d'activation 21, on procède à une détection 20 de la scène située dans l'environnement de l'appareil.

Par ailleurs, les capteurs CPTi (i = 1 à 5) délivrent des mesures 23 à des instants de mesure 22. Et, dans une étape 24, on détermine des critères qui vont permettre d'effectuer un ajustement 25 de ces instants de mesure.

Dans le cas où les instants de mesure correspondent aux instants d'activation, l'ajustement des instants de mesure correspond à l'ajustement des instants d'activation.

Si les instants d'activation sont différents des instants de mesure, alors on procède dans une étape 26 à l'ajustement des instants d'activation.

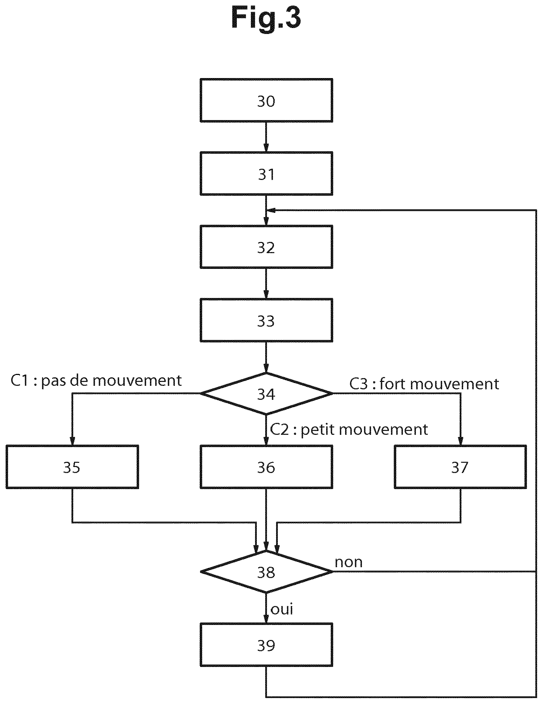

On se réfère maintenant plus particulièrement à la figure 3 pour décrire un exemple de détermination desdits critères et d'ajustement des instants de mesure.

Ceci est mis en oeuvre par exemple par une machine d'état. Après une phase d'initialisation 30, on fixe, dans une étape 31, une valeur initiale par défaut pour l'intervalle temporel entre deux instants de mesure. Cette valeur initiale par défaut peut être de l'ordre de quelques secondes, par exemple 2, 4 ou 6 secondes.

Puis, à l'issue de chaque intervalle (étape 32) on acquiert (étape 33) les valeurs de mesure fournies par les capteurs environnementaux. Et, dans une étape 34, on met en oeuvre un algorithme de classification (classifieur) qui va déterminer ici trois critères à partir des valeurs de mesure acquises, à savoir un premier critère C1 représentatif d'une « absence de mouvement », un deuxième critère C2 représentatif d'un « petit mouvement » et un troisième critère C3 représentatif d'un « fort mouvement ».

Un algorithme de classification ou classifieur est un algorithme bien connu de l'homme du métier. A cet égard, l'homme du métier pourra se référer à toutes fins utiles par exemple à l'ouvrage de Jason Brownlee intitulé « Master Learning Algorithms, discover how they work and implement them from scratch », 2016.

Cela étant, dans le cadre d'une implémentation particulièrement simple, utilisant peu de critères, comme par exemple ici trois critères, on peut utiliser comme classifieur un arbre de décision ayant réalisé une phase d'apprentissage sur une base de données de mesure des capteurs environnementaux. Un tel arbre de décision, est particulièrement simple à mettre en oeuvre et ne nécessite que quelques octets de mémoire et une fréquence de travail inférieure à 0,01 MHz.

Cela étant, il est préférable d'utiliser un méta algorithme de classification (ou méta classifieur) également bien connu de l'homme du métier qui va par exemple effectuer un vote majoritaire sur les cinq dernières mesures fournies par les capteurs par exemple, de façon à éviter des erreurs aberrantes.

En fonction du critère obtenu à l'issue de l'étape 34, on va définir trois valeurs différentes pour l'intervalle temporel séparant deux instants de mesure des capteurs.

Ainsi, dans l'étape 35 on pourra fixer une valeur d'intervalle temporel de l'ordre de 10 secondes tandis que l'on pourra fixer cette valeur à 6 secondes dans l'étape 36 et à deux secondes dans l'étape 37.

En d'autres termes, plus le mouvement va être rapide, plus on va diminuer l'intervalle temporel entre deux instants de mesure.

Dans l'étape 38, on vérifie si cette valeur d'intervalle temporel a été modifiée par rapport à la valeur précédemment stockée.

Si tel est le cas, alors dans l'étape 39, on réinitialise le classifieur avant d'effectuer une nouvelle détermination des critères.

Dans le cas contraire, on n'effectue pas de réinitialisation du classifieur.

Alors qu'on peut utiliser au minimum un accéléromètre voire plusieurs accéléromètres, on aura plus de précisions si l'on utilise également un gyroscope voire un magnétomètre.

Cela étant, il peut être particulièrement intéressant d'utiliser des capteurs audio qui sont des descripteurs utiles d'environnement. En effet, si l'appareil n'est pas en mouvement, alors le capteur audio peut être intéressant pour détecter la nature de cet environnement. Et, en fonction du changement de l'environnement audio on peut décider d'augmenter ou de diminuer l'intervalle entre les différents instants de mesure.

Bien entendu, en fonction des applications, on peut utiliser soit des capteurs environnementaux du type accéléromètres voire gyroscopes ou magnétomètres, soit des capteurs audio ou alors une combinaison de ces deux types de capteurs. Cela étant dans une optique de simplicité du classifieur, on peut avantageusement choisir de ne pas retenir d'approche multimodale pour l'ajustement des instants de mesure, c'est-à-dire ne pas utiliser de combinaison de ces deux types de capteurs.

Dans ce qui a été décrit ci-avant l'ajustement de l'intervalle temporel entre les instants de mesure détermine la périodicité de la détection de la scène.

Cela étant il serait possible, en variante de prévoir pour certains au moins des capteurs environnementaux des instants de mesure régulièrement espacés, par exemple toutes les 20 ms pour un accéléromètre, et un ajustement de la périodicité, généralement plus grande, des instants d'activation de la détection qui soit indépendant de cet intervalle de mesure constant, mais qui dépende des valeurs de mesure fournies par ces capteurs.

## Revendications

1. Procédé de contrôle de la détection en temps réel d'une scène par un appareil de communication sans fil équipé d'au moins un capteur de mesure environnemental, comprenant un ajustement temporel (26) des instants d'activation (21) de ladite détection à partir de valeurs de mesure (23) délivrées par ledit au moins un capteur de mesure environnemental (CPT1-CPT5) à des instants de mesure (22), **caractérisé en ce que** le procédé comprend en outre une détermination de plusieurs critères (C1-C3) à partir desdites valeurs de mesure, un ajustement temporel desdits instants d'activation à partir desdits critères, un ajustement temporel des instants de mesure à partir desdits critères et une réinitialisation (39) de la détermination de ces critères lors de chaque ajustement temporel des instants de mesure.

2. Procédé selon la revendication 1, dans lequel la détermination desdits critères (C1-C3) comprend une mise en oeuvre d'un algorithme de classification.

3. Procédé selon la revendication 2, dans lequel la détermination desdits critères (C1-C3) comprend une mise en oeuvre d'un méta algorithme de classification.

4. Procédé selon l'une des revendications précédentes, dans lequel l'ajustement temporel des instants de mesure comprend un ajustement (25) de la durée séparant deux instants de mesure successifs.

5. Procédé selon l'une des revendications précédentes, dans lequel l'ajustement temporel des instants d'activation comprend un ajustement (26) de la durée séparant deux instants d'activation successifs.

6. Procédé selon l'une des revendications précédentes, dans lequel les instants de mesure sont identiques aux instants d'activation.

7. Procédé selon l'une des revendications précédentes, dans lequel ledit au moins un capteur de mesure environnemental (CPT2-CPT5) comprend au moins un accéléromètre.

8. Procédé selon l'une des revendications précédentes, dans lequel ledit au moins un capteur de mesure environnemental (CPT2-CPT5) comprend au moins un capteur audio.

9. Procédé selon l'une des revendications précédentes, comprenant, l'appareil de communication sans fil étant équipé de plusieurs capteurs de mesure environnementaux, un ajustement temporel des instants d'activation de ladite détection à partir de valeurs de mesure délivrées par lesdits capteurs (CPT1-CPT5) à des instants de mesure.

10. Procédé selon la revendication 9, dans lequel lesdits capteurs de mesure environnementaux (CPT1-CPT5) sont choisis dans le groupe formé par un accéléromètre, un gyroscope, un magnétomètre, un capteur audio, un baromètre, un capteur de proximité, un capteur optique.

11. Appareil de communication sans fil, comprenant des moyens de détection (CPTi, BLC) configurés pour détecter en temps réel une scène, au moins un capteur de mesure environnemental (CPT1-CPT5), et des moyens de contrôle (MCTRL) configurés pour effectuer un ajustement temporel des instants d'activation de ladite détection à partir de valeurs de mesure délivrées par ledit au moins un capteur de mesure environnemental à des instants de mesure, **caractérisé en ce que** l'appareil comprend en outre des moyens de traitement (MTR) configurés pour effectuer une détermination de plusieurs critères à partir desdites valeurs de mesure, les moyens de contrôle configurés pour effectuer ledit ajustement temporel desdits instants d'activation à partir desdits critères, et des moyens de commande (MCM) configurés pour effectuer un ajustement temporel des instants de mesure à partir desdits critères et réinitialiser les moyens de détermination lors de chaque ajustement temporel des instants de mesure.

12. Appareil selon la revendication 11, dans lequel les moyens de traitement (MTR) comprennent une machine d'état mettant en oeuvre un algorithme de classification.

13. Appareil selon la revendication 12, dans lequel les moyens de traitement (MTR) comprennent une machine d'état mettant en oeuvre un méta algorithme de classification.

14. Appareil selon l'une des revendications 11 à 13, dans lequel les moyens de commande (MCM) sont configurés pour effectuer un ajustement de la durée séparant deux instants de mesure successifs.

15. Appareil selon l'une des revendications 11 à 14, dans lequel les moyens de contrôle (MCTRL) sont configurés pour effectuer un ajustement de la durée séparant deux instants d'activation successifs.

16. Appareil selon l'une des revendications 11 à 15, dans lequel ledit au moins un capteur de mesure environnemental (CPT2-CPT5) comprend au moins un accéléromètre.

17. Appareil selon l'une des revendications 11 à 16, dans lequel ledit au moins un capteur de mesure environnemental (CPT1-CPT5) comprend au moins un capteur audio.

18. Appareil selon l'une des revendications 11 à 17, comprenant plusieurs capteurs de mesure environnementaux (CPT1-CPT5), et les moyens de contrôle (MCTRL) sont configurés pour effectuer un ajustement temporel des instants d'activation de ladite détection à partir de valeurs de mesure délivrées par lesdits capteurs à des instants de mesure.

19. Appareil selon la revendication 18, dans lequel lesdits capteurs de mesure environnementaux (CPT1-CPT5) sont choisis dans le groupe formé par un accéléromètre, un gyroscope, un magnétomètre, un capteur audio, un baromètre, un capteur de proximité, un capteur optique.

20. Appareil selon l'une des revendications 11 à 19, dans lequel les moyens de détection incluent au moins un capteur de mesure environnemental (CPTi).

21. Appareil selon l'une des revendications 11 à 20 formant un téléphone mobile cellulaire ou une tablette numérique.

## Patentansprüche

1. Verfahren zur Kontrolle der Echtzeiterfassung einer Szene durch ein drahtloses Kommunikationsgerät, das mit mindestens einem Umweltmesssensor ausgestattet ist, das eine zeitliche Anpassung (26) der Aktivierungszeitpunkte (21) der Erfassung ausgehend von Messwerten (23) enthält, die vom mindestens einen Umweltmesssensor (CPT1-CPT5) zu Messzeitpunkten (22) geliefert werden,
**dadurch gekennzeichnet, dass** das Verfahren außerdem eine Bestimmung mehrerer Kriterien (C1-C3) ausgehend von den Messwerten, eine zeitliche Anpassung der Aktivierungszeitpunkte ausgehend von den Kriterien, eine zeitliche Anpassung der Messzeitpunkte ausgehend von den Kriterien und eine Rücksetzung (39) der Bestimmung dieser Kriterien bei jeder zeitlichen Anpassung der Messzeitpunkte enthält.

2. Verfahren nach Anspruch 1, wobei die Bestimmung der Kriterien (C1-C3) eine Durchführung eines Klassifikationsalgorithmus enthält.

3. Verfahren nach Anspruch 2, wobei die Bestimmung der Kriterien (C1-C3) eine Durchführung eines Meta-Klassifikationsalgorithmus enthält.

4. Verfahren nach einem der vorhergehenden Ansprüche, wobei die zeitliche Anpassung der Messzeitpunkte eine Anpassung (25) der Dauer enthält, die zwei aufeinanderfolgende Messzeitpunkte trennt.

5. Verfahren nach einem der vorhergehenden Ansprüche, wobei die zeitliche Anpassung der Aktivierungszeitpunkte eine Anpassung (26) der Dauer enthält, die zwei aufeinanderfolgende Aktivierungszeitpunkte trennt.

6. Verfahren nach einem der vorhergehenden Ansprüche, wobei die Messzeitpunkte den Aktivierungszeitpunkten gleich sind.

7. Verfahren nach einem der vorhergehenden Ansprüche, wobei der mindestens eine Umweltmesssensor (CPT2-CPT5) einen Beschleunigungsmesser enthält.

8. Verfahren nach einem der vorhergehenden Ansprüche, wobei der mindestens eine Umweltmesssensor (CPT2-CPT5) mindestens einen Audiosensor enthält.

9. Verfahren nach einem der vorhergehenden Ansprüche, das, wenn das drahtlose Kommunikationsgerät mit mehreren Umweltmesssensoren ausgestattet ist, eine zeitliche Anpassung der Aktivierungszeitpunkte der Erfassung ausgehend von Messwerten enthält, die von den Sensoren (CPT1-CPT5) zu Messzeitpunkten geliefert werden.

10. Verfahren nach Anspruch 9, wobei die Umweltmesssensoren (CPT1-CPT5 aus der Gruppe ausgewählt werden, die von einem Beschleunigungsmesser, einem Gyroskop, einem Magnetometer, einem Audiosensor, einem Barometer, einem Näherungssensor, einem optischen Sensor gebildet wird.

11. Drahtloses Kommunikationsgerät, das Erfassungseinrichtungen (CPTi, BLC), die konfiguriert sind, eine Szene in Echtzeit zu erfassen, mindestens einen Umweltmesssensor (CPT1-CPT5) und Kontrolleinrichtungen (MCTRL) enthält, die konfiguriert sind, eine zeitliche Anpassung der Aktivierungszeitpunkte der Erfassung ausgehend von Messwerten auszuführen, die vom mindestens einen Umweltmesssensor zu Messzeitpunkten geliefert werden, **dadurch gekennzeichnet, dass** das Gerät außerdem Verarbeitungseinrichtungen (MTR), die konfiguriert sind, eine Bestimmung mehrerer Kriterien ausgehend von den Messwerten auszuführen, die Kontrolleinrichtungen, die konfiguriert sind, die zeitliche Anpassung der Aktivierungszeitpunkte ausgehend von den Kriterien auszuführen, und Steuereinrichtungen (MCM) enthält, die konfiguriert sind, eine zeitliche Anpassung der Messzeitpunkte ausgehend von den Kriterien auszuführen und die Bestimmungseinrichtungen bei jeder zeitlichen Anpassung der Messzeitpunkte rückzusetzen.

12. Gerät nach Anspruch 11, wobei die Verarbeitungseinrichtungen (MTR) eine Zustandsmaschine enthalten, die einen Klassifikationsalgorithmus anwendet.

13. Gerät nach Anspruch 12, wobei die Verarbeitungseinrichtungen (MTR) eine Zustandsmaschine enthalten, die einen Meta-Klassifikationsalgorithmus anwendet.

14. Gerät nach einem der Ansprüche 11 bis 13, wobei die Steuereinrichtungen (MCM) konfiguriert sind, eine Anpassung der Dauer auszuführen, die zwei aufeinanderfolgende Messzeitpunkte trennt.

15. Gerät nach einem der Ansprüche 11 bis 14, wobei die Kontrolleinrichtungen (MCTRL) konfiguriert sind, eine Anpassung der Dauer auszuführen, die zwei aufeinanderfolgende Aktivierungszeitpunkte trennt.

16. Gerät nach einem der Ansprüche 11 bis 15, wobei der mindestens eine Umweltmesssensor (CPT2-CPT5) mindestens einen Beschleunigungsmesser enthält.

17. Gerät nach einem der Ansprüche 11 bis 16, wobei der mindestens eine Umweltmesssensor (CPT1-CPT5) mindestens einen Audiosensor enthält.

18. Gerät nach einem der Ansprüche 11 bis 17, das mehrere Umweltmesssensoren (CPT1-CPT5) enthält, und die Kontrolleinrichtungen (MCTRL) konfiguriert sind, eine zeitliche Anpassung der Aktivierungszeitpunkte der Erfassung ausgehend von Messwerten auszuführen, die von den Messsensoren zu Messzeitpunkten geliefert werden.

19. Gerät nach Anspruch 18, wobei die Umweltmesssensoren (CPT1-CPT5) aus der Gruppe ausgewählt werden, die von einem Beschleunigungsmesser, einem Gyroskop, einem Magnetometer, einem Audiosensor, einem Barometer, einem Näherungssensor, einem optischen Sensor gebildet wird.

20. Gerät nach einem der Ansprüche 11 bis 19, wobei die Erfassungseinrichtungen mindestens einen Umweltmesssensor (CPTi) umfassen.

21. Gerät nach einem der Ansprüche 11 bis 20, das ein zellulares Mobiltelefon oder einen Tablet-Computer bildet.

## Claims

1. Control method for real-time scene detection by a wireless communication apparatus equipped with at least one environmental measurement sensor, the method comprising a temporal adjustment (26) of the instants of activation (21) of said detection based on measurement values (23) delivered by said at least one environmental measurement sensor (CPT1-CPT5) at instants of measurement (22), **characterized in that** the method further comprises a determination of a number of criteria (C1-C3) on the basis of said measurement values, a temporal adjustment of said instants of activation based on said criteria, a temporal adjustment of the instants of measurement based on said criteria and a reinitialization (39) of the determination of these criteria at each temporal adjustment of the instants of measurement.

2. Method according to Claim 1, wherein the determination of said criteria (C1-C3) comprises the execution of a classification algorithm.

3. Method according to Claim 2, wherein the determination of said criteria (C1-C3) comprises the execution of a meta-classification algorithm.

4. Method according to any of the preceding claims, wherein the temporal adjustment of the instants of measurement comprises an adjustment (25) of the time interval separating two successive instants of measurement.

5. Method according to any of the preceding claims, wherein the temporal adjustment of the instants of instants of activation comprises an adjustment (26) of the time interval separating two successive instants of instants of activation.

6. Method as claimed in any of the preceding claims, wherein the instants of measurement are identical to the instants of activation.

7. Method according to any of the preceding claims, wherein said at least one environmental measurement sensor (CPT2-CPT5) comprises at least one accelerometer.

8. Method according to any of the preceding claims, wherein said at least one environmental measurement sensor (CPT2-CPT5) comprises at least one audio sensor.

9. Method according to any of the preceding claims, comprising, the wireless communication apparatus being equipped with a plurality of environmental measurement sensors, a temporal adjustment of the instants of activation of said detection, based on measurement values delivered by said sensors (CPT1-CPT5) at instants of measurement.

10. Method according to Claim 9, wherein said environmental measurement sensors (CPT1-CPT5) are selected from the group composed of an accelerometer, a gyroscope, a magnetometer, an audio sensor, a barometer, a proximity sensor, and an optical sensor.

11. Wireless communication apparatus, comprising detection means ((CPTi, BLC) configured to detect a scene in real time, at least one environmental measurement sensor (CPT1-CPT5), and control means (MCTRL) configured to perform a temporal adjustment of the instants of activation of said detection based on measurement values delivered by said at least one environmental measurement sensor at instants of measurement, **characterized in that** the apparatus further comprises processing means (MTR) configured to perform a determination of a number of criteria on the basis of said measurement values, the control means configured to perform said temporal adjustment of said instants of activation based on these criteria, and actuating means (MCM) configured to perform a temporal adjustment of the instants of measurement on the basis of said criteria and to reinitialize the determination means at each temporal adjustment of the instants of measurement.

12. Apparatus according to Claim 11, wherein the processing means (MTR) comprise a state machine executing a classification algorithm.

13. Apparatus according to Claim 12, wherein the processing means (MTR) comprise a state machine executing a meta-classification algorithm.

14. Apparatus according to any of Claims 11 to 13, wherein the actuating means (MCM) are configured to perform an adjustment of the time interval separating two successive instants of measurement.

15. Apparatus according to any of Claims 11 to 14, wherein the control means (MCTRL) are configured to perform an adjustment of the time interval separating two successive instants of activation.

16. Apparatus according to any of Claims 11 to 15, wherein said at least one environmental measurement sensor (CPT2-CPT5) comprises at least one accelerometer.

17. Apparatus according to any of Claims 11 to 16, wherein said at least one environmental measurement sensor (CPT1-CPT5) comprises at least an audio sensor.

18. Apparatus according to any of Claims 11 to 17, comprising a number of environmental measurement sensors (CPT1-CPT5), the control means (MCTRL) being configured to perform a temporal adjustment of the instants of activation of said detection based on measurement values delivered by said sensors at instants of measurement.

19. Apparatus according to Claim 18, wherein said environmental measurement sensors (CPT1-CPT5) are selected from the group composed of an accelerometer, a gyroscope, a magnetometer, an audio sensor, a barometer, a proximity sensor, and an optical sensor.

20. Apparatus according to any of Claims 11 to 19, wherein the detection means include at least one environmental measurement sensor (CPTi).

21. Apparatus unit according to any of Claims 11 to 20, forming a cellular mobile telephone or a digital tablet.
